# EUROPEAN PATENT SPECIFICATION

(11) **EP 4 044 514 B1**
(45) Date of publication and mention of the grant of the patent: **25.11.2026**
(21) Application number: 20888188.8
(22) Date of filing: 23.09.2020
(51) Int. Cl.: H04L 41/0895, H04L 41/0894, H04L 41/34, H04L 41/04

(54) **METHOD, DEVICE, AND SYSTEM FOR TRANSMITTING PACKET AND RECEIVING PACKET FOR PERFORMING OAM**
VERFAHREN, VORRICHTUNG UND SYSTEM ZUR ÜBERTRAGUNG VON PAKETEN UND ZUM EMPFANGEN VON PAKETEN ZUR DURCHFÜHRUNG VON OAM
PROCÉDÉ, DISPOSITIF ET SYSTÈME DE TRANSMISSION ET DE RÉCEPTION DE PAQUET POUR LA RÉALISATION D'OAM

(30) Priority: 14.11.2019 CN 201911115441
(43) Date of publication of application: 17.08.2022
(73) Proprietor: Huawei Technologies Co., Ltd., Shenzhen, Guangdong 518129 (CN)
(72) Inventor: ZHOU, Tianran, Shenzhen, Guangdong 518129 (CN); LIU, Min, Shenzhen, Guangdong 518129 (CN); SONG, Yuezhong, Shenzhen, Guangdong 518129 (CN); LI, Zhenbin, Shenzhen, Guangdong 518129 (CN)
(74) Representative: Gill Jennings & Every LLP
(86) International application number: PCT/CN2020/117246
(87) International publication number: WO 2021/093465

(56) References cited:
- EP-A1- 3 070 879
- CN-A- 1 703 013
- CN-A- 101 355 441
- CN-A- 102 388 567
- CN-A- 105 790 988
- US-A1- 2006 031 480
- US-A1- 2012 271 928
- US-A1- 2017 111 209
- US-A1- 2018 331 890

## Description

### TECHNICAL FIELD

This application relates to the communication field, and in particular, to a method, an apparatus, and a system for sending a packet and receiving a packet to perform OAM.

### BACKGROUND

Network management includes operation (operation), administration (administration), and maintenance (maintenance), which is referred to as operations, administration and maintenance (OAM). By performing the OAM, fault detection, path discovery, fault locating, and performance monitoring can be completed, to implement network analysis, prediction, planning, and configuration, and test and perform fault management on a service flow transmitted in a network.

Currently, the OAM may be performed on the service flow. A procedure of performing the OAM on the service flow may be: configuring identification information of the service flow on a head node (for example, a switch or a router) of a forwarding path, where the forwarding path is a path used to transmit the service flow in the network, and the identification information may be 5-tuple information of the service flow (including a source address, a destination address, a source port number, a destination port number, and a protocol type of the service flow). When receiving the service flow corresponding to the identification information, the head node performs the OAM on the service flow.

Currently, the OAM is not only performed on the service flow, but also needs to be performed on the forwarding path. When the OAM is performed on the forwarding path, all service flows transmitted on the forwarding path need to be first determined, and then identification information of each determined service flow needs to be configured on the head node. When receiving a service flow corresponding to any piece of the configured identification information, the head node performs the OAM on the service flow, to implement the OAM on the forwarding path.

In a process of implementing this application, a conventional technology has the following disadvantages.

Currently, it is difficult to determine all the service flows transmitted on the forwarding path. Consequently, it is relatively difficult to perform the OAM on the forwarding path. In addition, the identification information of each determined service flow needs to be configured on the head node, and a relatively large quantity of times of configuration leads to relatively low efficiency of performing the OAM on the forwarding path.

EP3070879A1 relates to OAM performance monitoring method and apparatus. US2017111209A1 relates to triggered in-band operations, administration, and maintenance in a network environment. US2018331890A1 relates to in-situ OAM trace type extension with cascade bitmap and segment in-situ OAM.

### SUMMARY

This application provides a method, an apparatus, and a system for sending a packet and receiving a packet, to reduce difficulty of performing OAM on a path and improve efficiency of performing the OAM on the path. The technical solutions are as follows.

The invention has been defined in the independent claims. Further specific technical features have been defined in the dependent claims.

According to a first aspect, this application provides a method for sending a packet according to claim 1. In the method, a controller generates a policy configuration packet, where the policy configuration packet includes operations, administration and maintenance (OAM) configuration information and information about a first path, and the information about the first path is used to identify the first path. The controller sends the policy configuration packet to a head node of the first path, and the policy configuration packet is used to indicate the head node to perform OAM on the first path based on the OAM configuration information. In this way, when the OAM is performed on the first path, there is no need to determine all service flows transmitted on the first path and configure identification information of each service flow on the head node, so that difficulty of performing the OAM on the first path is reduced, and efficiency of performing the OAM on the first path is improved.

The policy configuration packet is a segment routing policy SR Policy configuration packet, the SR Policy configuration packet includes information about a candidate path, the candidate path includes a segment list, and the first path is the candidate path or a path identified by the segment list. In this way, the OAM can be performed on the first path defined in an SR Policy. In this way, when performance of the first path changes, the head node can sense a change in the performance of the first path by performing the OAM on the first path.

When the first path is the candidate path, the SR Policy configuration packet further includes identification information, and the identification information is used to indicate the head node to perform the OAM on the candidate path based on the OAM configuration information when the candidate path is an active path. In this way, the head node may be indicated, by using the identification information, to perform the OAM on the active path.

In another possible implementation, the controller receives an OAM data packet, where the OAM data packet is obtained by performing the OAM on the first path. In this way, the controller may sense, based on the OAM data packet, a change in performance of the first path.

In another possible implementation, the segment routing policy configuration packet is a border gateway protocol (BGP) packet or a path computation element communication protocol (PCEP) packet.

In another possible implementation, the OAM configuration information includes at least one of an OAM manner, an OAM object, an OAM granularity, or an OAM frequency.

In another possible implementation, the OAM manner includes at least one of the following manners: in-situ operations, administration and maintenance (IOAM), internet protocol flow performance measurement IPFPM, in-situ flow information telemetry (iFIT), two-way active measurement protocol TWAMP, one-way active measurement protocol OWAMP, and PING.

According to a second aspect, this application provides a method for receiving a packet according to independent claim 6. In the method, a head node receives a policy configuration packet, where the policy configuration packet includes operations, administration and maintenance (OAM) configuration information and information about a first path, and the information about the first path is used to identify the first path. The head node performs OAM on the first path based on the OAM configuration information. In this way, when the OAM is performed on the first path, there is no need to determine all service flows transmitted on the first path and configure identification information of each service flow on the head node, so that difficulty of performing the OAM on the first path is reduced, and efficiency of performing the OAM on the first path is improved.

The policy configuration packet is a segment routing policy SR Policy configuration packet, the SR Policy configuration packet includes information about a candidate path, the candidate path includes a segment list, and the first path is the candidate path or a path identified by the segment list. In this way, the OAM can be performed on the first path defined in an SR Policy. In this way, when performance of the first path changes, the head node can sense a change in the performance of the first path by performing the OAM on the first path. When the first path is the candidate path, the SR Policy configuration packet further comprises identification information; and that the policy configuration packet is used to indicate the head node to perform OAM on the first path based on the OAM configuration information comprises: the identification information is used to indicate the head node to perform the OAM on the candidate path based on the OAM configuration information when the candidate path is an active path.

In another possible implementation, the head node obtains OAM execution information based on the OAM configuration information, receives a first packet, adds the OAM execution information to the first packet to generate a second packet, and sends the second packet through the first path. In this way, the OAM is performed on the first path.

In another possible implementation, the head node generates a first packet based on the OAM configuration information, where the first packet includes OAM execution information. The head node sends the first packet through the first path. In this way, the OAM is actively performed on the first path.

In another possible implementation, when the first path is the candidate path, the head node obtains identification information, and the identification information is used to indicate the head node to perform the OAM on the candidate path based on the OAM configuration information when the candidate path is an active path. In this way, the head node may be indicated, by using the identification information, to perform the OAM on the active path.

In another possible implementation, the head node performs the OAM on the first path, to obtain an OAM data packet. The head node sends the OAM data packet to a controller. In this way, the controller receives the OAM data packet, and may sense, based on the OAM data packet, a change in performance of the first path.

In another possible implementation, the segment routing policy configuration packet is a border gateway protocol (BGP) packet or a path computation element communication protocol (PCEP) packet.

According to a third aspect, this application provides an apparatus for sending a packet according to claim 10, the apparatus configured to perform the method according to any one of the first aspect or the possible implementations of the first aspect. Specifically, the apparatus includes units configured to perform the method according to any one of the first aspect or the possible implementations of the first aspect.

According to a fourth aspect, this application provides an apparatus for receiving a packet according to claim 11, the apparatus configured to perform the method according to any one of the second aspect or the possible implementations of the second aspect. Specifically, the apparatus includes units configured to perform the method according to any one of the second aspect or the possible implementations of the second aspect.

According to an example which is not claimed, this application provides an apparatus for sending a packet. The apparatus includes a processor, a memory, and a transceiver. The processor, the memory, and the transceiver may be connected by using a bus system. The memory is configured to store one or more programs, and the processor is configured to execute the one or more programs in the memory, to complete the method according to any one of the first aspect or the possible implementations of the first aspect.

According to another example which is not claimed, this application provides an apparatus for receiving a packet. The apparatus includes a processor, a memory, and a transceiver. The processor, the memory, and the transceiver may be connected by using a bus system. The memory is configured to store one or more programs, and the processor is configured to execute the one or more programs in the memory, to complete the method according to any one of the second aspect or the possible implementations of the second aspect.

According to an example which is not claimed, this application provides a computer-readable storage medium. The computer-readable storage medium stores program code. When the program code is run on a computer, the computer is enabled to perform the method in any one of the first aspect, the second aspect, the possible implementations of the first aspect, or the possible implementations of the second aspect.

According to an example which is not claimed, this application provides a computer program product including program code. When the computer program product runs on a computer, the computer is enabled to perform the method in any one of the first aspect, the second aspect, the possible implementations of the first aspect, or the possible implementations of the second aspect.

This application provides a system for receiving a packet, including the apparatus according to the third aspect and the apparatus according to the fourth aspect, or the apparatus according to the fifth aspect and the apparatus according to the sixth aspect.

### BRIEF DESCRIPTION OF DRAWINGS

FIG. 1 is a schematic diagram of a network architecture according to an implementation of this application;
FIG. 2 is a schematic diagram of a structure of a segment routing policy (segment routing Policy, SR Policy) according to an implementation of this application;
FIG. 3 is a flowchart of a method for sending a packet to perform OAM according to an implementation of this application;
FIG. 4 is a schematic diagram of a structure of an SR Policy configuration packet according to an implementation of this application;
FIG. 5 is a schematic diagram of a structure of another SR Policy configuration packet according to an implementation of this application;
FIG. 6 is a schematic diagram of a structure of another SR Policy configuration packet according to an implementation of this application;
FIG. 7 is a schematic diagram of a structure of another SR Policy configuration packet according to an implementation of this application;
FIG. 8 is a schematic diagram of a structure of another SR Policy configuration packet according to an implementation of this application;
FIG. 9 is a schematic diagram of a structure of another SR Policy configuration packet according to an implementation of this application;
FIG. 10 is a schematic diagram of a structure of another SR Policy configuration packet according to an implementation of this application;
FIG. 11 is a schematic diagram of a structure of another SR Policy configuration packet according to an implementation of this application;
FIG. 12 is a schematic diagram of a structure of a TLV field according to an implementation of this application;
FIG. 13 is a schematic diagram of a structure of another TLV field according to an implementation of this application;
FIG. 14 is a schematic diagram of a structure of another TLV field according to an implementation of this application;
FIG. 15 is a flowchart of a method for receiving a packet to perform OAM according to an implementation of this application;
FIG. 16 is a schematic diagram of a structure of an apparatus for sending a packet to perform OAM according to an implementation of this application;
FIG. 17 is a schematic diagram of a structure of an apparatus for receiving a packet to perform OAM according to an implementation of this application;
FIG. 18 is a schematic diagram of a structure of another apparatus for sending a packet to perform OAM according to an implementation of this application;
FIG. 19 is a schematic diagram of a structure of an apparatus for receiving a packet to perform OAM according to an implementation of this application; and
FIG. 20 is a schematic diagram of a structure of a system for receiving a packet to perform OAM according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those that comprise at least all the features of an independent claim. Any implementation that does not fall within the scope of the claims does not form part of the invention, but rather included as an illustrative example that is useful for understanding the invention.

OAM means operations, administration and maintenance. Performing the OAM on a communication network refers to collecting OAM information by a node on the communication network. The OAM is defined as follows:
(1) monitoring performance and generating maintenance information, to evaluate stability of a network based on the maintenance information;
(2) detecting a network fault through periodically querying and generating various maintenance information and alarm information;
(3) when the network fault occurs, scheduling or switching services to other entities to ensure normal running of the network; and
(4) transferring fault information to a management entity (for example, a controller).

In conclusion, the OAM performed on the communication network may include fault detection, path discovery, fault locating, performance monitoring, and the like. A node in an OAM domain in the communication network may perform the OAM. The OAM domain is a collection of all nodes that support an OAM function and that are in the communication network. The OAM domain usually has an ingress node and an egress node. The ingress node may be referred to as a head node, and the egress node may be referred to as a tail node. There is at least one path between the head node and the tail node, and a node that each path passes through may support the OAM function.

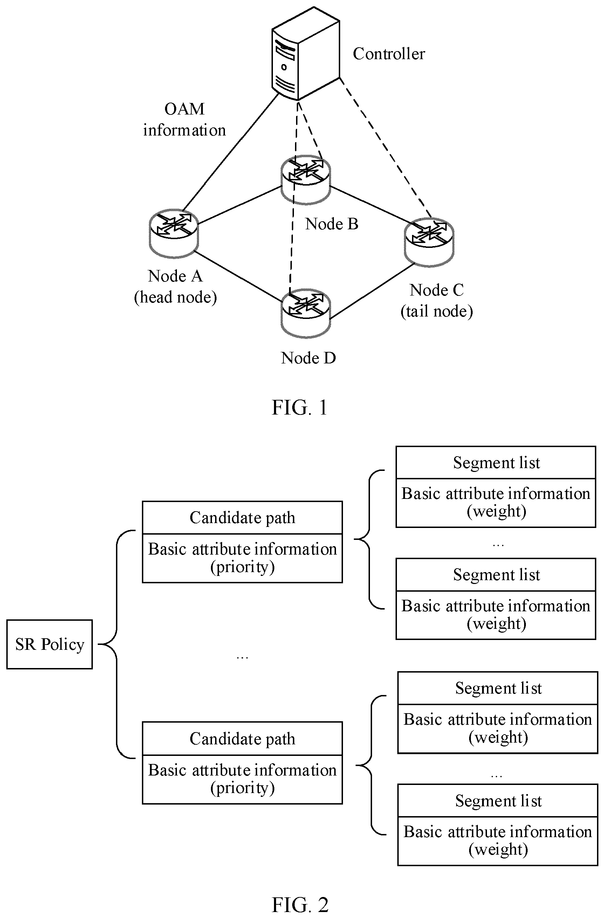

For example, refer to a network architecture shown in FIG. 1. It is assumed that the OAM domain includes a node A, a node B, a node C, and a node D in the network architecture. The network architecture further includes a controller. The controller is connected to the node A, and the controller may also be connected to the node B, the node C, and the node D. The node A is the head node in the OAM domain, the head node A is responsible for determining OAM configuration information, the node C is the tail node in the OAM domain, and the head node A or the tail node C may obtain an OAM result based on OAM information collected by all nodes that are in the OAM domain, and reports the OAM result to the controller. In the OAM domain, there are two paths between the head node A and the tail node C. One path includes the nodes A, B, and C, and the other path includes the nodes A, D, and C.

Optionally, the node in the communication network may be a network device, for example, may be a device such as a router or a switch.

Currently, the OAM needs to be performed on a path in the OAM domain. To perform the OAM on the path in the OAM domain, the controller may generate a policy configuration packet, where the policy configuration packet includes the OAM configuration information and information about a first path. The information about the first path is used to identify the first path, and the first path is a path between the head node and the tail node; and may send the policy configuration packet to the head node. The head node receives the policy configuration packet, and performs, based on the OAM configuration information, the OAM on the first path identified by the information about the first path.

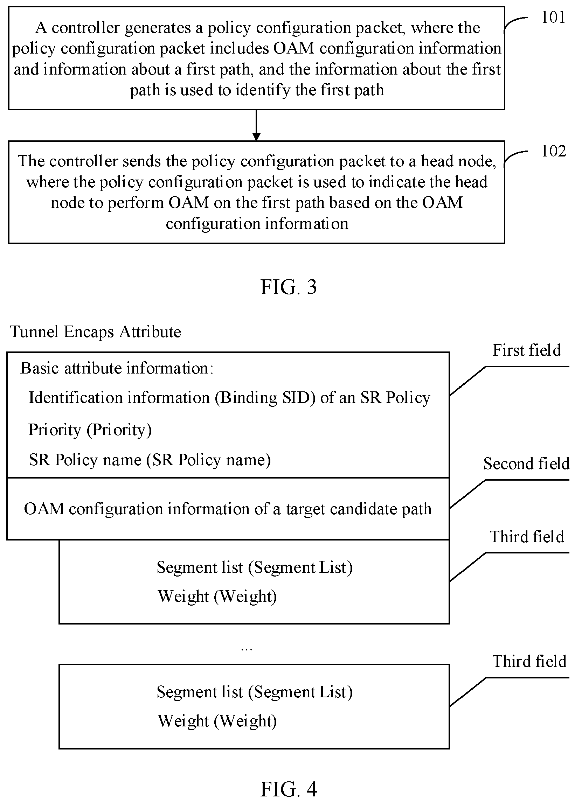

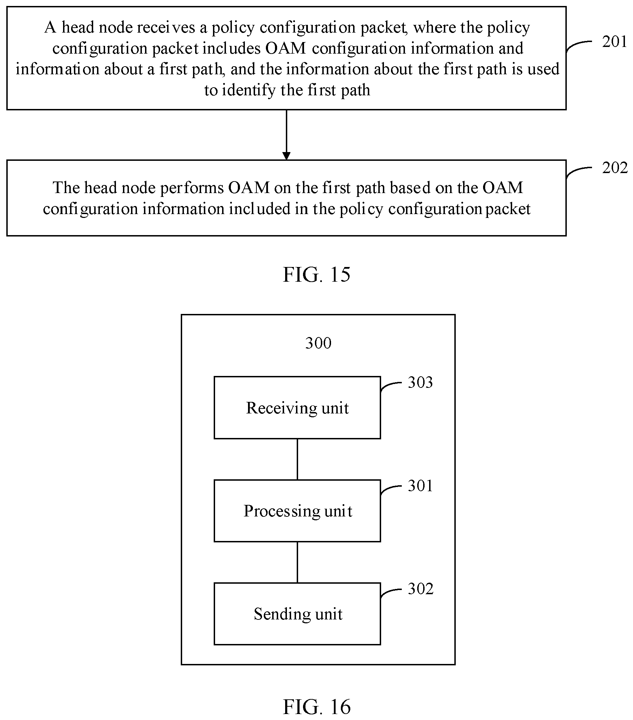

For a detailed implementation process in which the controller generates the policy configuration packet to send the policy configuration packet to the head node, refer to the following implementation shown in FIG. 3. For a detailed implementation process in which the head node receives the policy configuration packet and performs the OAM on the first path, refer to the following implementation shown in FIG. 15. Details are not described herein.

Optionally, the network architecture shown in FIG. 1 may be used in an SR Policy scenario, a segment routing traffic engineering (segment routing traffic engineering, SR TE) scenario, or the like. The SR Policy scenario or the SR TE scenario includes a head node, a tail node, and at least one path between the head node and the tail node. In addition, a node that each path passes through usually supports an OAM function.

Optionally, the following uses the SR Policy scenario as an example for description. In the SR Policy scenario, the policy configuration packet is a segment routing policy (segment routing Policy, SR Policy) configuration packet. The SR Policy configuration packet includes information about a candidate path, the candidate path includes a segment list, and the first path is the candidate path or a path identified by the segment list.

Optionally, the controller sends the SR Policy configuration packet to the head node when configuring an SR Policy between the head node and the tail node, and configures the SR Policy between the head node and the tail node based on the SR Policy configuration packet. The SR policy defines the head node, tail node, and performance requirement information. Refer to FIG. 2. The SR Policy further defines at least one candidate path between the head node and the tail node, each candidate path includes at least one segment list, and each segment list is used to identify a path between the head node and the tail node.

Optionally, the performance requirement information includes a parameter threshold of at least one performance parameter. For example, the at least one performance parameter includes one or more of a delay, a packet loss rate, and the like. The parameter threshold includes one or more of a delay threshold, a packet loss rate threshold, and the like. The delay threshold is used to indicate that when the path defined in the SR Policy is used to transmit a service, the SR Policy can ensure that a delay generated on the path does not exceed the delay threshold as far as possible. The packet loss rate threshold is used to indicate that when the path defined in the SR Policy is used to transmit a service, the SR Policy can ensure that a packet loss rate generated on the path does not exceed the packet loss rate threshold as far as possible.

Each of the at least one candidate path includes at least one segment list. Optionally, when each candidate path includes a plurality of segment lists, load balancing may be performed among the plurality of segment lists. Optionally, the head node may alternatively select one or more segment lists from the at least one segment list, and send the service by using a path identified by the selected segment list.

Optionally, refer to FIG. 2. The SR Policy further defines basic attribute information of each candidate path. Basic attribute information of any candidate path includes information such as a priority (priority) of the any candidate path. When the any candidate path is an active path, the basic attribute information of the any candidate path further includes identification information (Binding SID) of the SR Policy.

Optionally, refer to FIG. 2. The SR Policy further defines basic attribute information of each segment list. Basic attribute information of any segment list includes a weight of the any segment list, and the like.

Optionally, there is one active path in the at least one candidate path, and another candidate path in the at least one candidate path is an inactive path. When the head node needs to send a service to the tail node, the head node may send the service to the tail node by using the active path.

After the SR Policy is configured, it is necessary to perform the OAM on the candidate path defined in the SR Policy or the path identified by the segment list defined in the SR Policy. When the OAM is performed on a candidate path or a path identified by a segment list, it may be found in time that performance provided by the candidate path or performance provided by the path identified by the segment list cannot meet the performance requirement information defined in the SR Policy. For a detailed implementation process, refer to the implementation shown in FIG. 3 or FIG. 15.

Refer to FIG. 3. An implementation of this application provides a method for sending a packet. The method may be applied to the network architecture shown in FIG. 1, and includes the following steps.

Step 101: A controller generates a policy configuration packet, where the policy configuration packet includes OAM configuration information and information about a first path, and the information about the first path is used to identify the first path.

Optionally, the policy configuration packet is an SR Policy configuration packet, the SR Policy configuration packet includes information about a target candidate path, the target candidate path includes a target segment list, and the first path is the target candidate path or a path identified by the target segment list.

The target candidate path is one or more candidate paths in at least one candidate path defined in an SR Policy. The target segment list is one or more segment lists in at least one segment list included in the target candidate path. The OAM configuration information is OAM configuration information of the first path.

The controller sends the SR Policy configuration packet to a head node when configuring, on the head node, the SR Policy between the head node and a tail node. The SR Policy configuration packet includes basic configuration information of the SR Policy and the OAM configuration information of the first path.

Refer to FIG. 2. The basic configuration information includes information about the at least one candidate path defined in the SR Policy, performance requirement information defined in the SR Policy, and the like. Information about any candidate path includes basic attribute information of the candidate path, at least one segment list, and basic attribute information of each segment list. The first path (target candidate path) is one or more candidate paths in the at least one candidate path, or the first path (target segment list) is one or more segment lists in the target candidate path.

Optionally, the OAM configuration information may include an OAM attribute. The OAM attribute may include at least one of an OAM manner, an OAM object, an OAM granularity, or an OAM frequency.

Optionally, the OAM object may include one or more performance parameters such as a delay and a packet loss rate.

Optionally, the OAM manner includes an in-band OAM manner or an out-band OAM manner. The in-band OAM manner includes in-band operations, administration and maintenance (In-situ OAM, IOAM), in-situ flow information telemetry (in-situ flow information telemetry, iFIT), alternate marking (Alternate Marking), an abstract in-band flow analyzer (abstract in-band flow analyzer, IFA), an internet protocol flow performance monitor (internet protocol flow performance monitor, IPFPM), in-band flow information measurement (in-situ flow information telemetry, iFIT), and the like. The out-band OAM manner includes a two-way active measurement protocol (two-way active measurement protocol, TWAMP), a one-way active measurement protocol (one-way active measurement protocol, OWAMP), PING, a simple two-way active measurement protocol (simple two-way active measurement protocol, STAMP), two-way active measurement protocol light (TWAMP LIGHT), and the like.

Optionally, when the first path is the target candidate path, a first field in the SR Policy configuration packet includes basic attribute information of the target candidate path, a second field in the SR Policy configuration packet includes the OAM configuration information of the first path, and the second field is adjacent to the first field or is located in the first field.

Optionally, when the first path is the target segment list, a third field in the SR Policy configuration packet includes the target segment list, a fourth field in the SR Policy configuration packet includes the OAM configuration information of the first path, and the fourth field is adjacent to the third field or is located in the third field.

For example, refer to FIG. 4. The SR Policy configuration packet is a border gateway routing (border gateway protocol, BGP) packet, and the controller may generate at least one BGP packet. Any BGP packet may include information about a candidate path. The BGP packet shown in FIG. 4 includes a first field and at least one third field after the first field. It is assumed that the first field includes the basic attribute information of the target candidate path and is located in any third field after the first field. The any third field includes a segment list in the target candidate path and basic attribute information of the segment list. Optionally, the first field may further include information such as a name of the SR Policy.

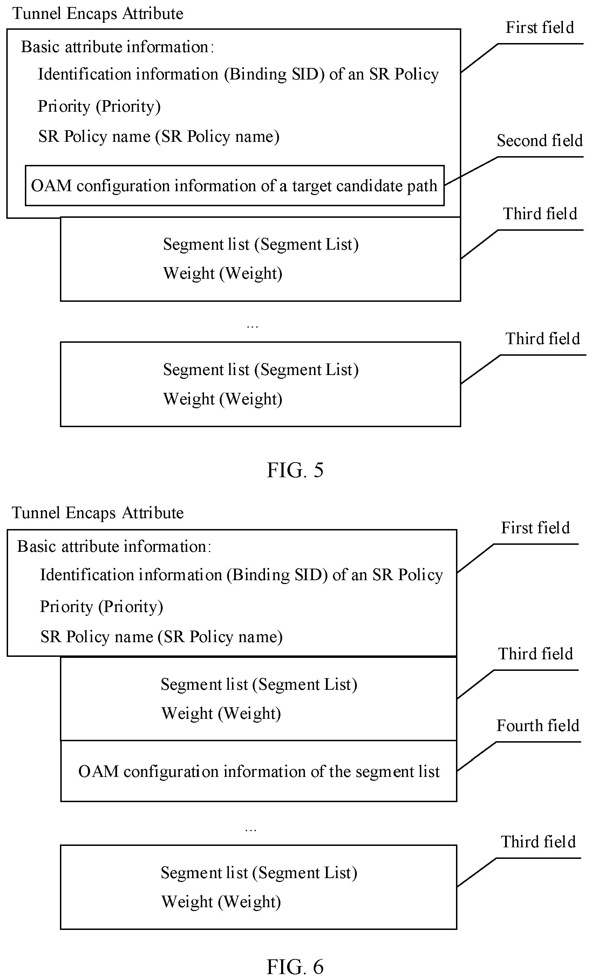

Refer to FIG. 4. When the first path is the target candidate path, a second field in the BGP packet includes OAM configuration information of the target candidate path, and the second field is adjacent to the first field or is located in the first field. For example, in the example shown in FIG. 4, the second field is adjacently after the first field, and is used to indicate that OAM configuration information in the second field is the OAM configuration information of the target candidate path. Alternatively, in the example shown in FIG. 5, the second field is located in the first field, and is used to indicate that OAM configuration information in the second field is the OAM configuration information of the target candidate path.

Optionally, the first field is a type length value (type length value, TLV) field. When the first field is adjacent to the second field, the second field is also a TLV field. When the second field is located in the first field, the second field is a sub-TLV field located in the first field.

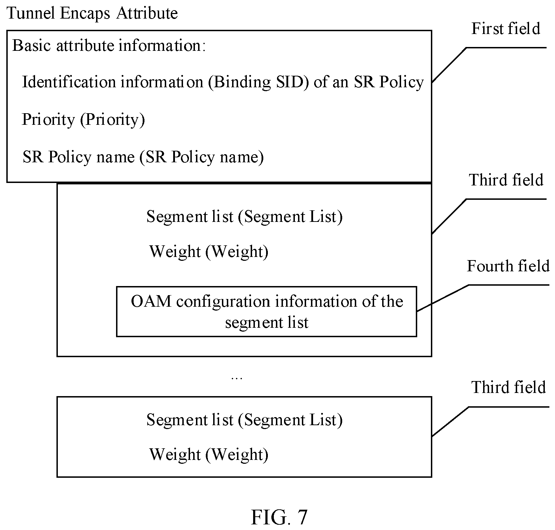

Refer to FIG. 6. When the first path is the path identified by the target segment list included in the target candidate path, a fourth field in the BGP packet includes OAM configuration information of the target segment list, a third field in the BGP packet includes the target segment list and basic attribute information of the target segment list, and the fourth field is adjacent to the third field or is located in the third field. For example, in the example shown in FIG. 6, the fourth field is adjacently after the third field, and is used to indicate that OAM configuration information in the fourth field is the OAM configuration information of the target segment list. Alternatively, in the example shown in FIG. 7, the fourth field is located in the third field, and is used to indicate that OAM configuration information in the fourth field is the OAM configuration information of the target segment list.

Optionally, the third field is a TLV field. The third field includes a plurality of sub-TLV fields, the target segment list includes a plurality of segments (Segment), and each segment may correspond to one sub-TLV field. A sub-TLV field corresponding to any segment includes the segment. The basic attribute information of the target segment list corresponds to at least one sub-TLV, and the at least one sub-TLV field includes the basic attribute information of the target segment list.

When the third field is adjacent to the fourth field, the fourth field is also a TLV field. Alternatively, when the fourth field is located in the third field, the fourth field is a sub-TLV field located in the third field.

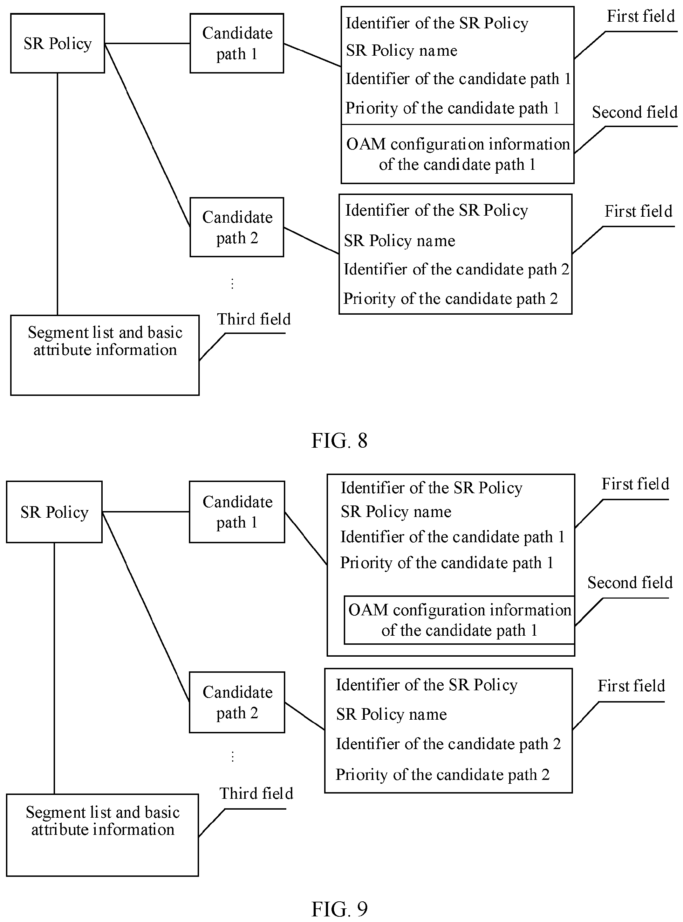

For example, refer to FIG. 8. The SR Policy configuration packet is a path computation element communication protocol (path computation element communication protocol, PCEP) packet, and the controller may generate at least one PCEP packet. Any PCEP packet may include basic attribute information of each candidate path defined in the SR Policy, a segment list included in one candidate path, and the basic attribute information of the target segment list.

Optionally, when the SR Policy configuration packet is the PCEP packet, a candidate path defined in the SR Policy includes a segment list. The controller may configure one candidate path on the head node by using one PCEP packet. In this way, the controller needs to configure candidate paths of the SR Policy between the head node and the tail node by using the at least one PCEP packet.

For example, it is assumed that the PCEP packet shown in FIG. 8 is used to configure the target candidate path, the target candidate path includes the target segment list, and the PCEP packet includes a first field corresponding to each candidate path and a third field corresponding to the target segment list included in the target candidate path. A first field corresponding to any candidate path includes basic attribute information of the any candidate path. The basic attribute information of the any candidate path includes an identifier and a priority of the any candidate path. Optionally, the first field corresponding to the any candidate path further includes an identifier and a name of the SR Policy. The third field corresponding to the target segment list includes the target segment list and the basic attribute information of the target segment list.

Optionally, refer to FIG. 8. The first field corresponding to the any candidate path includes four TLV fields: a first TLV, a second TLV, a third TLV, and a fourth TLV. The first TLV includes the identifier of the SR Policy, the second TLV includes the name of the SR Policy, the third TLV includes the identifier of the any candidate path, and the fourth TLV includes the priority of the any candidate path. The third field is a TLV field, and the TLV field includes the target segment list and the basic attribute information of the target segment list. In the PCEP packet, the third field may also include a plurality of sub-TLV fields, the target segment list includes a plurality of segments, and each segment may correspond to one sub-TLV field. A sub-TLV field corresponding to any segment includes the segment. The basic attribute information of the target segment list corresponds to at least one sub-TLV, and the at least one sub-TLV field includes the basic attribute information of the target segment list.

Refer to FIG. 8. When the first path is the target candidate path, it is assumed that the target candidate path is a candidate path 1, a second field in the PCEP packet includes OAM configuration information of the target candidate path, and the second field is adjacent to the first field corresponding to the target candidate path or is located in the first field corresponding to the target candidate path. For example, in the example shown in FIG. 8, the second field is adjacently after the first field corresponding to the target candidate path, and is used to indicate that OAM configuration information in the second field is the OAM configuration information of the target candidate path. Alternatively, in the example shown in FIG. 9, the second field is located in the first field corresponding to the target candidate path, and is used to indicate that OAM configuration information in the second field is the OAM configuration information of the target candidate path.

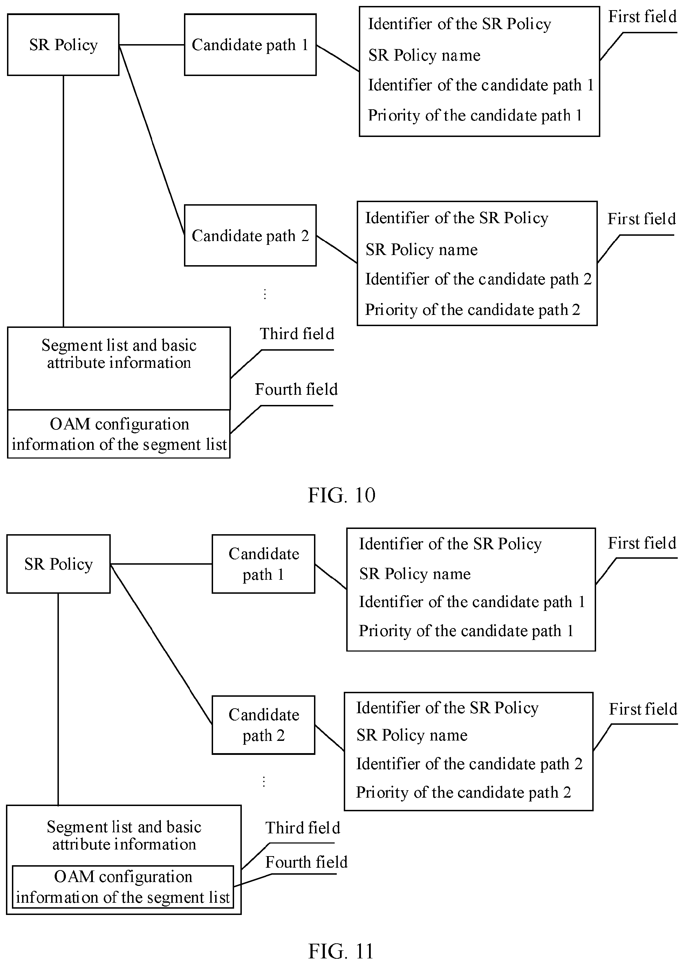

Refer to FIG. 10. When the first path is the path identified by the target segment list included in the target candidate path, a fourth field in the PCEP packet includes OAM configuration information of the target segment list, a third field in the PCEP packet includes the target segment list and the basic attribute information of the target segment list, and the fourth field is adjacent to the third field or is located in the third field. For example, in the example shown in FIG. 10, the fourth field is adjacently after the third field, and is used to indicate that OAM configuration information in the fourth field is the OAM configuration information of the target segment list. Alternatively, in the example shown in FIG. 11, the fourth field is located in the third field, and is used to indicate that OAM configuration information in the fourth field is the OAM configuration information of the target segment list.

In the PCEP packet, when the third field is adjacent to the fourth field, the fourth field is also a TLV field. Alternatively, when the fourth field is located in the third field, the fourth field is a sub-TLV field located in the third field.

Optionally, the second field including the OAM configuration information of the target candidate path or the fourth field including the OAM configuration information of the target segment list is a TLV field. The TLV field includes three subfields: type (Type), length (Length), and value (Value). The type subfield may be used to include an OAM manner, and the value subfield may be used to include at least one of an OAM object, an OAM granularity, or an OAM frequency.

Optionally, when the first path is the candidate path, the SR Policy configuration packet further includes identification information. The identification information is used to indicate the head node to perform OAM on an active path, or the identification information is used to indicate the head node to perform OAM on an inactive path and an active path.

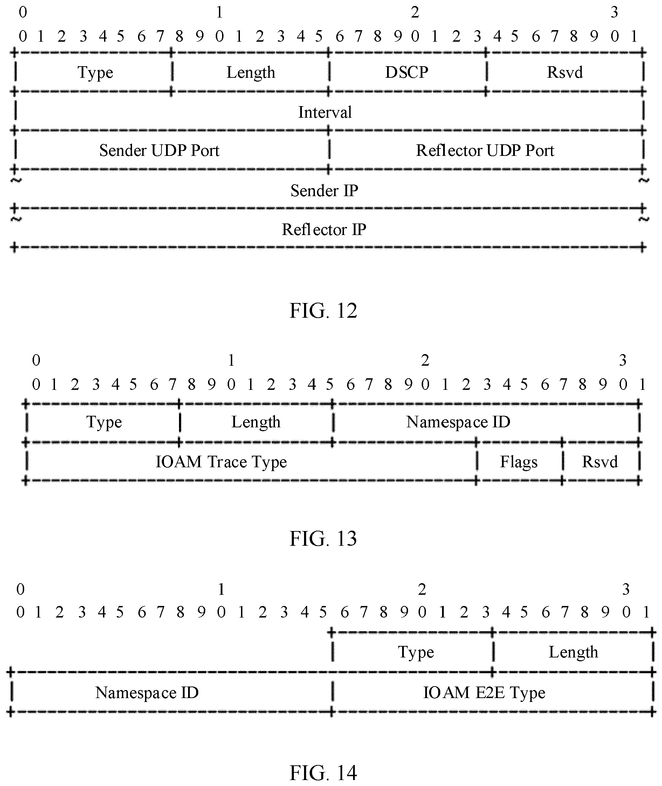

Optionally, in this step, a TLV field may be added to the SR Policy configuration packet, where the TLV field includes the OAM configuration information. Several TLV fields are listed below. Refer to the first TLV field shown in FIG. 12. In the first TLV field, a value of a type (Type) field indicates an OAM manner, and the OAM manner may be a simple two-way active measurement protocol (Simple Two-way Active Measurement Protocol, STAMP). In other words, the value of the type field indicates that the first TLV is a STAMP TLV field. The first TLV field further includes an address and a port number of a head node, an address and a port number of a tail node, and an OAM frequency. The first TLV field may not include an OAM object, and the head node includes a default OAM object.

In the first TLV field, a length (Length) field indicates a total length of a value field, excluding lengths of the type field and the length field. A DSCP field indicates a DSCP value to be set in a test data packet. An interval (Interval) field includes the OAM frequency and represents a time interval between two consecutive transmissions of a data packet, where the data packet is a data packet in a test session, and the interval is on a per-microsecond basis. A sender UDP port (Sender UDP Port) field includes the port number of the head node, indicates a UDP port number of a sender, and a value of the sender UDP port field ranges from 49152 to 65535. A reflector UDP port (Reflector UDP Port) field includes the port number of the tail node, has a default value 862 (corresponding to a TWAMP test receiver port), and ranges from 1024 to 65535. A sender IP (Sender IP) field includes the address of the head node. When the length field occupies 18 bytes, the address of the head node is an IPv4 address. When the length field occupies 42 bytes, the address of the head node is an IPv6 address. A reflector IP (Reflector IP) field includes the address of the tail node. When the length field occupies 18 bytes, the address of the tail node is an IPv4 address. When the length field occupies 42 bytes, the address of the tail node is an IPv6 address. A Rsvd field is a field reserved for further use.

Refer to the second TLV field shown in FIG. 13. In the second TLV field, a value of a type (Type) field indicates an OAM manner, and the OAM manner may be IOAM pre-allocated (IOAM Pre-allocated). In other words, the value of the type field indicates that the second TLV is an IOAM Pre-allocated Trace Option Sub-TLV field. Alternatively, the OAM manner may be an IOAM incremental trace (IOAM Incremental Trace). In other words, the value of the type field indicates that the second TLV is an IOAM Incremental Trace Option Sub-TLV field. A length field indicates a total length of a value field, excluding lengths of the type field and the length field. A Namespace ID (Namespace ID) field indicates a 16-bit identifier in an IOAM namespace. An IOAM trace type (IOAM Trace Type) field includes at least one of an OAM object, an OAM granularity, an OAM frequency, or the like, and may be a 24-bit identifier. A flags (Flags) field may be a 4-bit field. A reserved (Rsvd) field may be a 4-bit field reserved for further use.

Refer to the third TLV field shown in FIG. 14. In the third TLV field, a value of a type (Type) field indicates an OAM manner, and the OAM manner may be IOAM edge-to-edge or IOAM end-to-end (IOAM Edge-to-Edge). In other words, the value of the type field indicates that the third TLV is an IOAM Edge-to-Edge Option Sub-TLV field. A length field indicates a total length of a value field, excluding lengths of the type field and the length field. A Namespace ID field may represent a 16-bit identifier in an IOAM namespace. An IOAM E2E Type field includes at least one of an OAM object, an OAM granularity, an OAM frequency, or the like, and is a 16-bit identifier.

The type field may be allocated by the Internet Assigned Numbers Authority (Internet Assigned Numbers Authority, IANA). Refer to Table 1. Table 1 describes meanings indicated by different values of the type as an example.

**Table 1**

| Value | Meaning |
|---|---|
| 1 | STAMP Sub-TLV |
| 2 | IOAM Pre-allocated Trace Option Sub-TLV |
| 3 | IOAM Incremental Trace Option Sub-TLV |
| 4 | IOAM Edge-to-Edge Trace Option Sub-TLV |

Step 102: The controller sends the policy configuration packet to the head node, where the policy configuration packet is used to indicate the head node to perform the OAM on the first path based on the OAM configuration information.

After receiving the policy configuration packet, the head node performs the OAM on the first path based on the OAM configuration information included in the policy configuration packet. For a detailed implementation process in which the head node performs the OAM, refer to the following implementation shown in FIG. 15. Details are not described herein.

When performing the OAM on the first path, the head node obtains an OAM data packet, and sends the OAM data packet to the controller. The controller receives the OAM data packet.

In this implementation of this application, the controller generates the policy configuration packet, where the policy configuration packet includes the OAM configuration information and the information about the first path, and the information about the first path is used to identify the first path, and the controller sends the policy configuration packet to the head node of the first path. In this way, the head node may perform the OAM on the first path based on the OAM configuration information included in the policy configuration packet. In this way, when the OAM is performed on the first path, there is no need to determine all service flows transmitted on the first path and configure identification information of each service flow on the head node, so that difficulty of performing the OAM on the first path is reduced, and efficiency of performing the OAM on the first path is improved. Performance of the first path may be obtained by performing the OAM on the first path, so that when the performance of the first path changes, the change can also be perceived in time. When performing the OAM on the first path, the head node obtains the OAM data packet, and sends the OAM data packet to the controller. In this way, the controller can also perceive the change in the performance of the first path based on the OAM data packet.

Refer to FIG. 15. An implementation of this application provides a method for receiving a packet to perform OAM. The method is applied to the network architecture shown in FIG. 1, and includes the following steps.

Step 201: A head node receives a policy configuration packet, where the policy configuration packet includes OAM configuration information and information about a first path, and the information about the first path is used to identify the first path.

Optionally, the policy configuration packet may be generated by a controller, and the controller may generate the policy configuration packet in the manner shown in the implementation shown in FIG. 3. In this step, the head node receives the policy configuration packet sent by the controller.

Optionally, the policy configuration packet is an SR Policy packet, and the SR Policy configuration packet includes basic configuration information of an SR Policy and the OAM configuration information. The basic configuration information includes information about at least one candidate path, performance requirement information of the SR Policy, and the like. Information about any candidate path includes basic attribute information of the candidate path, at least one segment list, and basic attribute information of each segment list.

The first path is one or more candidate paths in the at least one candidate path. For ease of description, the one or more candidate paths are referred to as a target candidate path. Alternatively, the first path is one or more segment lists in the target candidate path. For ease of description, the one or more segment lists are referred to as a target segment list.

Optionally, after receiving the policy configuration packet, the head node may further send a policy response packet to the controller, where the policy response packet includes OAM response information, and the OAM response information is used to indicate whether an OAM function is successfully configured on the head node.

Optionally, when the first path is the target candidate path, the policy configuration packet may include a TLV field corresponding to the target candidate path, and the TLV field may include an OAM response message corresponding to the target candidate path. When the first path is the target segment list, the policy configuration packet may include a TLV field corresponding to the target segment list, and the TLV field may include an OAM response message corresponding to the target segment list.

Step 202: The head node performs OAM on the first path based on the OAM configuration information included in the policy configuration packet.

After receiving the SR Policy configuration packet, the head node may store the basic configuration information of the SR Policy. The head node then performs the OAM on the first path based on the OAM configuration information.

Optionally, when the first path is the target candidate path, the head node determines a first field that is in the SR Policy configuration packet and that includes basic attribute information of the target candidate path, determines, based on the first field, a second field that is in the SR Policy configuration packet and that includes OAM configuration information of the target candidate path, and extracts the OAM configuration information of the target candidate path from the second field.

Optionally, in the SR Policy configuration packet, the head node determines the second field adjacent to the first field, or determines the second field located in the first field.

Optionally, the OAM configuration information of the target candidate path includes at least one of an OAM manner, an OAM object, an OAM granularity, or an OAM frequency.

Optionally, the OAM configuration information of the target candidate path includes the OAM manner, but does not include the OAM object. In this case, the head node obtains a default OAM object. Alternatively, the OAM configuration information of the target candidate path includes the OAM object but does not include the OAM manner. In this case, the head node obtains a default OAM manner.

In this step, when the OAM manner is an in-band OAM manner, the head node obtains OAM execution information based on the OAM configuration information, receives a first packet, adds the OAM execution information to the first packet to generate a second packet, and sends the second packet to a tail node through the candidate path, to perform the OAM on the candidate path.

The head node and the tail node are network devices in a communication network. Therefore, the head node may receive the first packet from another network device or a terminal device.

The OAM execution information obtained by the head node may include the OAM object. After receiving the first packet, when determining to transmit the first packet by using the target candidate path, the head node adds the OAM execution information to a packet header of the first packet, to obtain the second packet.

The target candidate path includes at least one segment list, and the head node selects one or more segment lists from the at least one segment list, and sends the second packet to the tail node by using a path identified by the selected segment list.

The basic configuration information of the SR Policy includes a weight of each of the at least one segment list, and the head node may select one or more of segment lists based on the weight of each segment list.

Any node that a path identified by any selected segment list passes through receives the second packet, collects, based on the OAM object in the second packet, the path identified by the segment list to obtain OAM information, adds the OAM information obtained through collection to the second packet, and then forwards the second packet to the tail node. The tail node receives the second packet, collects, based on the OAM object in the second packet, the path identified by the segment list to obtain OAM information, and obtains an OAM result based on the OAM information collected by the tail node and the OAM information in the second packet.

Optionally, the head node may store identification information, or the SR Policy configuration packet further includes the identification information. The identification information is used to indicate the head node to perform the OAM on an active path, or the identification information is used to indicate the head node to perform the OAM on an inactive path and an active path.

Optionally, an operation of generating the second packet by the head node may be: The head node obtains the identification information, and judges the identification information when determining to transmit the first packet by using the target candidate path. When determining that the identification information is used to indicate the head node to perform the OAM on the active path, the head node determines whether the target candidate path is the active path. If the target candidate path is the active path, the head node adds the OAM execution information to the first packet to generate the second packet, that is, performs the OAM on the target candidate path. If the target candidate path is the inactive path, the head node directly sends the first packet to the tail node. When determining that the identification information is used to indicate the head node to perform the OAM on the inactive path and the active path, the head node directly adds the OAM execution information to the first packet to generate the second packet, that is, directly performs the OAM on the target candidate path.

Optionally, that the head node obtains the identification information may be that the head node obtains the identification information from the received policy configuration packet, that is, the identification information is included in the policy configuration packet. The identification information may be added by the controller to the policy configuration packet.

Optionally, that the head node obtains the identification information may alternatively be that the head node reads the identification information stored by the head node, that is, the identification information is set in the head node. The identification information may be manually configured by a network administrator on the head node. Alternatively, after receiving a control packet sent by the controller, the head node may generate the identification information based on an indication of the control packet, and may store the identification information in the head node.

Optionally, the tail node sends an OAM data packet to the controller, where the OAM data packet includes the OAM result.

For example, assuming that the OAM object is a delay and/or a packet loss rate, the head node adds the delay and/or the packet loss rate to the first packet to generate the second packet, and sends the second packet to the tail node by using the path identified by the selected segment list. The any node that the path identified by the segment list passes through receives the second packet, collects a delay and/or a packet loss rate of the path identified by the segment list (that is, obtains OAM information through collection), adds the delay and/or packet loss rate obtained through collection to the second packet, and then forwards the second packet to the tail node. The tail node receives the second packet, collects a delay and/or a packet loss rate of the path identified by the segment list, and calculates a delay average value based on the delay collected by the tail node and the delay in the second packet, and/or calculates a packet loss rate average value based on the packet loss rate collected by the tail node and the packet loss rate in the second packet, to obtain an OAM result, where the OAM result includes the delay average value and/or the packet loss rate average value.

In this step, when the OAM manner is an out-band OAM manner, the head node generates the first packet based on the OAM configuration information, where the first packet includes OAM execution information, and sends the first packet to the tail node through the candidate path, to perform the OAM on the candidate path.

The OAM execution information obtained by the head node may include the OAM object. A packet header of the first packet generated by the head node includes the OAM execution information.

The candidate path includes at least one segment list, and the head node selects one or more segment lists from the at least one segment list, and sends the first packet to the tail node by using a path identified by the selected segment list.

Any node that the path identified by the selected segment list passes through receives the first packet, collects, based on the OAM object in the first packet, the path identified by the segment list, adds OAM information obtained through collection to the first packet, and then forwards the first packet to the tail node. The tail node receives the first packet, collects, based on the OAM object in the first packet, the path identified by the segment list, adds OAM information obtained through collection to the first packet, and sends the first packet to the head node. In this way, the head node receives the first packet, and obtains an OAM result based on the OAM information in the received first packet.

Optionally, when the head node stores identification information or the SR Policy configuration packet further includes identification information, an operation of generating the first packet by the head node may be: The head node determines usage of the identification information. When determining that the identification information is used to indicate the head node to perform the OAM on an active path, the head node determines whether the target candidate path is the active path. If the target candidate path is the active path, the head node generates the first packet, that is, performs the OAM on the target candidate path. When determining that the identification information is used to indicate the head node to perform the OAM on an inactive path and an active path, the head node directly generates the first packet, that is, directly performs the OAM on the target candidate path.

Optionally, the head node sends an OAM data packet to the controller, where the OAM data packet includes the OAM result.

For example, assuming that the OAM object is a delay and/or a packet loss rate, the packet header of the first packet generated by the head node includes the delay and/or the packet loss rate, and the head node sends the first packet to the tail node by using the path identified by the selected segment list. The any node that the path identified by the segment list passes through receives the first packet, collects a delay and/or a packet loss rate of the path identified by the segment list, adds the delay and/or packet loss rate obtained through collection to the first packet, and then forwards the first packet to the tail node. The tail node receives the first packet, collects a delay and/or a packet loss rate of the path identified by the segment list, adds the delay and/or packet loss rate obtained through collection to the first packet, and sends the first packet to the head node. The head node receives the first packet, and calculates a delay average value based on the delays in the received first packet, and/or calculates a packet loss rate average value based on the packet loss rates in the received first packet, to obtain an OAM result, where the OAM result includes the delay average value and/or the packet loss rate average value.

When the OAM manner is the out-band OAM manner, the OAM configuration information may include the OAM frequency. In this step, the OAM is performed on the target candidate path based on the OAM frequency. In other words, the head node generates the first packet based on the OAM frequency, and sends the first packet to the tail node through the target candidate path.

Optionally, when the first path is the target segment list, the head node determines a third field that is in the SR Policy configuration packet and that includes the target segment list, determines, based on the third field, a fourth field that is in the SR Policy configuration packet and that includes OAM configuration information of the target segment list, and extracts the OAM configuration information of the target segment list from the fourth field.

Optionally, in the SR Policy configuration packet, the head node determines the fourth field adjacent to the third field, or determines the fourth field located in the third field.

Optionally, the OAM configuration information of the target segment list includes at least one of an OAM manner, an OAM object, an OAM granularity, or an OAM frequency.

Optionally, the OAM configuration information of the target segment list includes the OAM manner, but does not include the OAM object. In this case, the head node obtains a default OAM object. Alternatively, the OAM configuration information of the target segment list includes the OAM object but does not include the OAM manner. In this case, the head node obtains a default OAM manner.

In this step, when the OAM manner is the in-band OAM manner, the head node obtains the OAM execution information based on the OAM configuration information, receives the first packet, adds the OAM execution information to the first packet to generate the second packet, and sends the second packet to the tail node through a path identified by the target segment list, to perform the OAM on the path identified by the segment list.

The OAM execution information obtained by the head node may include the OAM object. After receiving the first packet, when determining to transmit the first packet by using the path identified by the target segment list, the head node adds the OAM execution information to the packet header of the first packet, to obtain the second packet.

Any node that the path identified by the target segment list passes through receives the second packet, collects, based on the OAM object in the second packet, the path identified by the target segment list, adds the OAM information obtained through collection to the second packet, and then forwards the second packet to the tail node. The tail node receives the second packet, collects, based on the OAM object in the second packet, the path identified by the target segment list, and obtains the OAM result based on the OAM information obtained by the tail node through collection and the OAM information in the second packet.

Optionally, the tail node sends the OAM data packet to the controller, where the OAM data packet includes the OAM result.

For example, assuming that the OAM object is the delay and/or the packet loss rate, the head node adds the delay and/or the packet loss rate to the first packet to generate the second packet, and sends the second packet to the tail node by using the path identified by the target segment list. The any node that the path identified by the segment list passes through receives the second packet, obtains a delay and/or a packet loss rate by collecting the path identified by the target segment list, adds the delay and/or packet loss rate obtained through collection to the second packet, and then forwards the second packet to the tail node. The tail node receives the second packet, obtains a delay and/or a packet loss rate by collecting the path identified by the target segment list, and calculates a delay average value based on the delay obtained by the tail node through collection and the delay in the second packet, and/or calculates a packet loss rate average value based on the packet loss rate obtained by the tail node through collection and the packet loss rate in the second packet, to obtain an OAM result, where the OAM result includes the delay average value and/or the packet loss rate average value.

In this step, when the OAM manner is the out-band OAM manner, the head node generates the first packet based on the OAM configuration information, where the first packet includes the OAM execution information, and sends the first packet to the tail node through a path identified by the target segment list, to perform the OAM on the path identified by the target segment list.

The OAM execution information obtained by the head node may include the OAM object. The packet header of the first packet generated by the head node includes the OAM execution information.

Any node that the path identified by the target segment list passes through receives the first packet, collects, based on the OAM object in the first packet, the path identified by the target segment list, adds OAM information obtained through collection to the first packet, and then forwards the first packet to the tail node. The tail node receives the first packet, collects, based on the OAM object in the first packet, the path identified by the target segment list, and sends the first packet to the head node. In this way, the head node receives the first packet, and obtains an OAM result based on the OAM information in the received first packet.

Optionally, the head node sends an OAM data packet to the controller, where the OAM data packet includes the OAM result obtained by collecting the target segment list.

For example, assuming that the OAM object is the delay and/or the packet loss rate, the packet header of the first packet generated by the head node includes the delay and/or the packet loss rate, and the head node sends the first packet to the tail node by using the path identified by the target segment list. The any node that the path identified by the target segment list passes through receives the first packet, collects a delay and/or a packet loss rate of the path identified by the target segment list, adds the delay and/or packet loss rate obtained through collection to the first packet, and then forwards the first packet to the tail node. The tail node receives the first packet, collects a delay and/or a packet loss rate of the path identified by the target segment list, adds the delay and/or packet loss rate obtained through collection to the first packet, and sends the first packet to the head node. The head node receives the first packet, and calculates a delay average value based on the delays in the received first packet, and/or calculates a packet loss rate average value based on the packet loss rates in the received first packet, to obtain an OAM result.

When the OAM manner is the out-band OAM manner, and the OAM configuration information includes the OAM frequency, in this step, the OAM is performed on the path identified by the target segment list based on the OAM frequency. In other words, the head node generates the first packet based on the OAM frequency, and sends the first packet to the tail node through the path identified by the target segment list.

When the OAM manner is the in-band OAM manner, the OAM configuration information may include the OAM granularity, and the OAM granularity is used to indicate a granularity at which the tail node sends the OAM result. The OAM granularity can be on a per-service-flow basis or a per-packet basis. On a per-service-flow basis means that when completing receiving second packets in a service flow, the tail node sends an OAM data packet to the controller, where the OAM data packet include an OAM result, and the OAM result is obtained based on the received second packets. On a per-packet basis means that when receiving a second packet in a service flow, the tail node sends an OAM data packet to the controller, where the OAM data packet includes an OAM result, and the OAM result is obtained based on the second packet.

Optionally, when perceiving, based on the OAM result, that performance of the first path cannot meet the performance requirement information defined in the SR Policy, the controller or the head node may adjust the first path. For example, when the first path is the target candidate path, a priority of the target candidate path is adjusted; when the first path is the target segment list, a weight of the target segment list is adjusted.

In this implementation of this application, the head node receives the policy configuration packet, where the policy configuration packet includes the OAM configuration information and the information about the first path, and the information about the first path is used to identify the first path. In this way, the head node may perform the OAM on the first path based on the OAM configuration information included in the policy configuration packet. In this way, when the OAM is performed on the first path, there is no need to determine all service flows transmitted on the first path and configure identification information of each service flow on the head node, so that difficulty of performing the OAM on the first path is reduced, and efficiency of performing the OAM on the first path is improved. The performance of the first path may be obtained by performing the OAM on the first path, so that when the performance of the first path changes, the change can also be perceived in time. When performing the OAM on the first path, the head node obtains the OAM data packet, and sends the OAM data packet to the controller. In this way, the controller can also perceive the change in the performance of the first path based on the OAM data packet. When perceiving that the performance of the first path cannot meet the performance requirement information defined in the SR Policy, the controller or the head node may adjust the first path. For example, when the first path is the target candidate path, the priority of the target candidate path is adjusted; when the first path is the target segment list, the weight of the target segment list is adjusted.

Refer to FIG. 16. An implementation of this application provides an apparatus 300 for sending a packet to perform OAM. The apparatus 300 may be deployed on the controller in any one of the foregoing implementations, for example, may be deployed on the controller in the implementation shown in FIG. 3. The apparatus 300 includes:
a processing unit 301, configured to generate a policy configuration packet, where the policy configuration packet includes OAM configuration information and information about a first path, and the information about the first path is used to identify the first path; and
a sending unit 302, configured to send the policy configuration packet to a head node of the first path, where the policy configuration packet is used to indicate the head node to perform OAM on the first path based on the OAM configuration information.

Optionally, for a detailed implementation process in which the processing unit 301 generates the policy configuration packet, refer to related content of generating the policy configuration packet by the controller in step 101 in the implementation shown in FIG. 3.

Optionally, the policy configuration packet is an SR Policy configuration packet, the SR Policy configuration packet includes information about a candidate path, the candidate path includes a segment list, and the first path is the candidate path or a path identified by the segment list.

Optionally, for a structure of the SR Policy configuration packet, refer to related content of the SR Policy configuration packet in step 301 in the implementation shown in FIG. 3.

Optionally, when the first path is the candidate path, the SR Policy configuration packet further includes identification information, and the identification information is used to indicate the head node to perform the OAM on the candidate path based on the OAM configuration information when the candidate path is an active path.

Optionally, the apparatus 300 further includes:
a receiving unit 303, configured to receive an OAM data packet, where the OAM data packet is obtained by performing the OAM on the first path.

Optionally, the policy configuration packet is a border gateway protocol (BGP) packet or a path computation element communication protocol (PCEP) packet.

Optionally, the OAM configuration information includes at least one of an OAM manner, an OAM object, an OAM granularity, or an OAM frequency.

Optionally, the OAM manner includes at least one of the following manners: in-situ operations, administration and maintenance (IOAM), internet protocol flow performance measurement IPFPM, in-situ flow information telemetry (iFIT), two-way active measurement protocol TWAMP, one-way active measurement protocol OWAMP, and PING.

In this implementation of this application, the processing unit generates the policy configuration packet, where the policy configuration packet includes the OAM configuration information and the information about the first path, and the information about the first path is used to identify the first path. The sending unit sends the policy configuration packet to the head node of the first path, and the policy configuration packet is used to indicate the head node to perform the OAM on the first path based on the OAM configuration information. In this way, when the OAM is performed on the first path, there is no need to determine all service flows transmitted on the first path and configure identification information of each service flow on the head node, so that difficulty of performing the OAM on the first path is reduced, and efficiency of performing the OAM on the first path is improved.

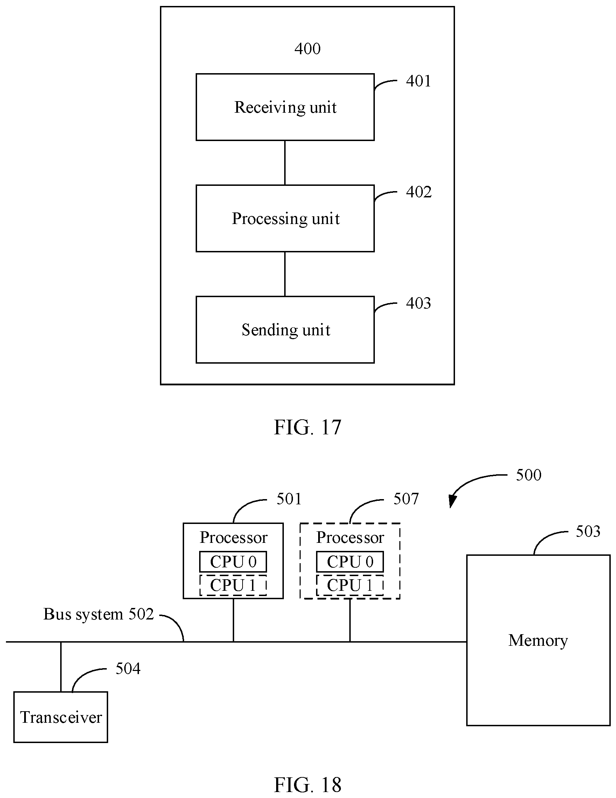

Refer to FIG. 17. An implementation of this application provides an apparatus 400 for receiving a packet to perform OAM. The apparatus 400 may be deployed on the head node in any one of the foregoing implementations, for example, may be deployed on the head node in the implementation shown in FIG. 15. The apparatus 400 includes:
a receiving unit 401, configured to receive a policy configuration packet, where the policy configuration packet includes OAM configuration information and information about a first path, and the information about the first path is used to identify the first path; and
a processing unit 402, configured to perform OAM on the first path based on the OAM configuration information.

Optionally, for a detailed implementation process in which the processing unit 402 performs the OAM on the first path, refer to related content of performing the OAM on the first path by the head node in step 202 in the implementation shown in FIG. 15.

Optionally, the policy configuration packet is an SR Policy configuration packet, the SR Policy configuration packet includes information about a candidate path, the candidate path includes a segment list, and the first path is the candidate path or a path identified by the segment list.

Optionally, the apparatus 400 further includes a sending unit 403, where
the processing unit 402 is configured to obtain OAM execution information based on the OAM configuration information;
the receiving unit 401 is further configured to receive a first packet;
the processing unit 402 is further configured to add the OAM execution information to the first packet to generate a second packet; and
the sending unit 403 is configured to send the second packet through the first path.

Optionally, for a detailed implementation process in which the processing unit 402 obtains OAM information and generates the second packet, refer to related content of step 202 in the implementation shown in FIG. 15 in which the head node obtains the OAM information and generates the second packet.

Optionally, the processing unit 402 is configured to generate the first packet based on the OAM configuration information, where the first packet includes the OAM execution information.

The sending unit 403 is configured to send the first packet through the first path.

Optionally, for a detailed implementation process in which the processing unit 402 obtains and generates the first packet, refer to related content of generating the first packet by the head node in step 202 in the implementation shown in FIG. 15.

Optionally, when the first path is the candidate path, the processing unit 402 is configured to obtain identification information, and the identification information is used to indicate the processing unit 402 to perform the OAM on the candidate path based on the OAM configuration information when the candidate path is an active path.

Optionally, the processing unit 402 is further configured to perform the OAM on the first path, to obtain an OAM data packet.

The sending unit 403 is configured to send the OAM data packet to a controller.

Optionally, the policy configuration packet is a BGP packet or a PCEP packet.

In this implementation of this application, the receiving unit receives the policy configuration packet, where the policy configuration packet includes the OAM configuration information and the information about the first path, and the information about the first path is used to identify the first path. The processing unit performs the OAM on the first path based on the OAM configuration information. In this way, when the OAM is performed on the first path, there is no need to determine all service flows transmitted on the first path and configure identification information of each service flow on the apparatus, so that difficulty of performing the OAM on the first path is reduced, and efficiency of performing the OAM on the first path is improved.

FIG. 18 is a schematic diagram of an apparatus 500 for sending a packet to perform OAM according to an implementation of this application. The apparatus 500 may be the controller in any one of the foregoing implementations, for example, may be the controller in the implementation shown in FIG. 3. The apparatus 500 includes at least one processor 501, a bus system 502, a memory 503, and at least one transceiver 504.

The apparatus 500 is an apparatus of a hardware structure, and can be configured to implement the function modules in the apparatus 300 shown in FIG. 16. For example, a person skilled in the art may figure out that the processing unit 301 in the apparatus 300 shown in FIG. 16 may be implemented by the at least one processor 501 by invoking code in the memory 503, and the sending unit 302 and the receiving unit 303 in the apparatus 300 shown in FIG. 16 may be implemented by the transceiver 504.

Optionally, the apparatus 500 may further be configured to implement a function of the collection analysis device in any one of the foregoing implementations.

Optionally, the processor 501 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions of this application.

The bus system 502 may include a path for transmitting information between the foregoing components.

The transceiver 504 is configured to communicate with another device or a communication network.

The memory 503 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. The memory may exist independently, and is connected to the processor through a bus. The memory may alternatively be integrated with the processor.

The memory 503 is configured to store application program code for executing the solutions in this application, and the processor 501 controls the execution. The processor 501 is configured to execute the application program code stored in the memory 503, to implement functions in the method in this patent.

In a specific implementation, in an implementation, the processor 501 may include one or more CPUs, for example, a CPU 0 and a CPU 1 in FIG. 16.

In a specific implementation, in an implementation, the apparatus 500 may include a plurality of processors, for example, the processor 501 and a processor 507 shown in FIG. 16. Each of the processors may be a single-CPU (single-CPU) processor, or may be a multi-CPU (multi-CPU) processor. The processor herein may be one or more devices, circuits, and/or processing cores configured to process data (for example, computer program instructions).

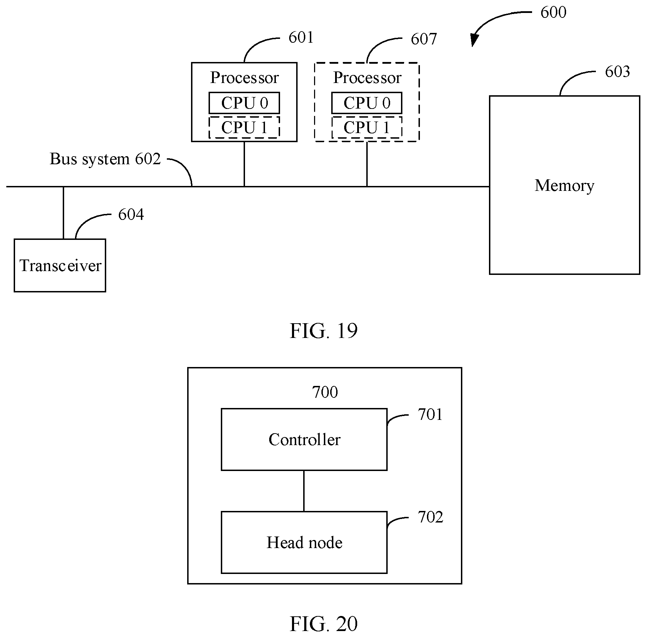

FIG. 19 is a schematic diagram of an apparatus 600 for receiving a packet to perform OAM according to an implementation of this application. The apparatus 600 may be the head node in any one of the foregoing implementations, for example, may be the head node in the implementation shown in FIG. 15. The apparatus 600 includes at least one processor 601, a bus system 602, a memory 603, and at least one transceiver 604.

The apparatus 600 is an apparatus of a hardware structure, and can be configured to implement the function modules in the apparatus 400 shown in FIG. 17. For example, a person skilled in the art may figure out that the processing unit 402 in the apparatus 400 shown in FIG. 17 may be implemented by the at least one processor 601 by invoking code in the memory 603, and the receiving unit 401 and the sending unit 403 in the apparatus 400 shown in FIG. 17 may be implemented by the transceiver 604.

Optionally, the apparatus 600 may further be configured to implement a function of the collection analysis device in any one of the foregoing implementations.

Optionally, the processor 601 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions of this application.

The bus system 602 may include a path for transmitting information between the foregoing components.

The transceiver 604 is configured to communicate with another device or a communication network.

The memory 603 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. The memory may exist independently, and is connected to the processor through a bus. The memory may alternatively be integrated with the processor.

The memory 603 is configured to store application program code for executing the solutions in this application, and the processor 601 controls the execution. The processor 601 is configured to execute the application program code stored in the memory 603, to implement functions in the method in this patent.

In a specific implementation, in an implementation, the processor 601 may include one or more CPUs, for example, a CPU 0 and a CPU 1 in FIG. 19.

In a specific implementation, in an implementation, the apparatus 600 may include a plurality of processors, for example, the processor 601 and a processor 607 shown in FIG. 19. Each of the processors may be a single-CPU (single-CPU) processor, or may be a multi-CPU (multi-CPU) processor. The processor herein may be one or more devices, circuits, and/or processing cores configured to process data (for example, computer program instructions).

Refer to FIG. 20. An implementation of this application provides a system 700 for receiving a packet to perform the OAM. The system 700 includes the apparatus 300 shown in FIG. 16 and the apparatus 400 shown in FIG. 17, or the system 700 includes the apparatus 500 shown in FIG. 18 and the apparatus 600 shown in FIG. 19.

Optionally, refer to FIG. 20. The apparatus 300 in FIG. 16 or the apparatus 500 in FIG. 18 may be a controller 701, and the apparatus 400 in FIG. 17 or the apparatus 600 in FIG. 19 may be a head node 702. For example, the apparatus 300 in FIG. 16 or the apparatus 500 in FIG. 18 may be the controller in the implementation shown in FIG. 3, and the apparatus 400 in FIG. 17 or the apparatus 600 in FIG. 19 may be the head node in the implementation shown in FIG. 15.

Optionally, the system 700 may further include another network device such as a tail node.

The scope of protection is defined by the appended claims.

## Claims

1. A method for sending a packet, wherein the method comprises:
generating (101), by a controller, a policy configuration packet, wherein the policy configuration packet comprises operations, administration and maintenance, OAM, configuration information and information about a first path, and the information about the first path is used to identify the first path; and
sending (102), by the controller, the policy configuration packet to a head node of the first path, wherein the policy configuration packet is used to indicate the head node to perform OAM on the first path based on the OAM configuration information,
**characterised in that**:
the policy configuration packet is a segment routing policy, SR Policy, configuration packet, the SR Policy configuration packet comprises information about a candidate path, the candidate path comprises a segment list, and the first path is the candidate path or a path identified by the segment list; and
when the first path is the candidate path, the SR Policy configuration packet further comprises identification information; and
that the policy configuration packet is used to indicate the head node to perform OAM on the first path based on the OAM configuration information comprises:
the identification information is used to indicate the head node to perform the OAM on the candidate path based on the OAM configuration information when the candidate path is an active path.

2. The method according to claim 1, wherein after the sending, by the controller, the policy configuration packet to a head node, the method further comprises:
receiving, by the controller, an OAM data packet, wherein the OAM data packet is obtained by performing the OAM on the first path.

3. The method according to any one of claims 1 to 2, wherein the segment routing policy configuration packet is a border gateway protocol, BGP, packet or a path computation element communication protocol, PCEP, packet.

4. The method according to any one of claims 1 to 3, wherein the OAM configuration information comprises at least one of an OAM manner, an OAM object, an OAM granularity, and an OAM frequency.

5. The method according to claim 4, wherein the OAM manner comprises at least one of the following manners: in-situ operations, administration and maintenance, IOAM, internet protocol flow performance measurement, IPFPM, in-situ flow information telemetry, iFIT, two-way active measurement protocol, TWAMP, one-way active measurement protocol, OWAMP, and PING.

6. A method for receiving a packet, wherein the method comprises:
receiving (201), by a head node, a policy configuration packet, wherein the policy configuration packet comprises operations, administration and maintenance, OAM, configuration information and information about a first path, and the information about the first path is used to identify the first path; and
performing (202), by the head node, OAM on the first path based on the OAM configuration information.
**characterised in that**:
the policy configuration packet is a segment routing policy, SR Policy, configuration packet, the SR Policy configuration packet comprises information about a candidate path, the candidate path comprises a segment list, and the first path is the candidate path or a path identified by the segment list; and
when the first path is the candidate path, the SR Policy configuration packet further comprises identification information; and
that the policy configuration packet is used to indicate the head node to perform OAM on the first path based on the OAM configuration information comprises:
the identification information is used to indicate the head node to perform the OAM on the candidate path based on the OAM configuration information when the candidate path is an active path.

7. The method according to claim 6, wherein the performing, by the head node, OAM on the first path based on the OAM configuration information comprises:
obtaining, by the head node, OAM execution information based on the OAM configuration information;
receiving, by the head node, a first packet;
adding, by the head node, the OAM execution information to the first packet, to generate a second packet; and
sending, by the head node, the second packet through the first path.

8. The method according to claim 6, wherein the performing, by the head node, OAM on the first path based on the OAM configuration information comprises:
generating, by the head node, a first packet based on the OAM configuration information, wherein the first packet comprises OAM execution information; and
sending, by the head node, the first packet through the first path.

9. The method according to any one of claims 6 to 8, wherein the method further comprises:
performing, by the head node, the OAM on the first path, to obtain an OAM data packet; and
sending, by the head node, the OAM data packet to a controller.

10. An apparatus for sending a packet, wherein the apparatus is configured to implement the method according to any one of claims 1 to 5.

11. An apparatus for receiving a packet, wherein the apparatus is configured to implement the method according to any one of claims 6 to 9.

12. A system (700) for sending and receiving a packet, wherein the system comprises a controller (701) and a head node (702), the controller is configured to implement the method according to any one of claims 1 to 5, and head node is configured to implement the method according to any one of claims 6 to 9.

## Patentansprüche

1. Verfahren zum Senden eines Pakets, wobei das Verfahren Folgendes umfasst:
Erzeugen (101), durch eine Steuerung, eines Richtlinienkonfigurationspakets, wobei das Richtlinienkonfigurationspaket Konfigurationsinformationen für Betrieb, Administration und Wartung bzw. OAM-Konfigurationsinformationen und Informationen über einen ersten Pfad umfasst und die Informationen über den ersten Pfad verwendet werden, um den ersten Pfad zu identifizieren; und
Senden (102), durch die Steuerung, des Richtlinienkonfigurationspakets an einen Kopfknoten des ersten Pfads, wobei das Richtlinienkonfigurationspaket verwendet wird, um dem Kopfknoten anzugeben, OAM an dem ersten Pfad basierend auf den OAM-Konfigurationsinformationen durchzuführen,
**dadurch gekennzeichnet, dass**:
das Richtlinienkonfigurationspaket ein Segmentroutingrichtlinien- bzw. SR-Richtlinienkonfigurationspaket ist, das SR-Richtlinienkonfigurationspaket Informationen über einen Kandidatenpfad umfasst, der Kandidatenpfad eine Segmentliste umfasst und der erste Pfad der Kandidatenpfad oder ein durch die Segmentliste identifizierter Pfad ist; und
wenn der erste Pfad der Kandidatenpfad ist, das SR-Richtlinienkonfigurationspaket ferner Identifikationsinformationen umfasst; und
dass das Richtlinienkonfigurationspaket verwendet wird, um dem Kopfknoten anzugeben, OAM an dem ersten Pfad basierend auf den OAM-Konfigurationsinformationen durchzuführen, Folgendes umfasst:
die Identifikationsinformationen werden verwendet, um dem Kopfknoten anzugeben, das OAM an dem Kandidatenpfad basierend auf den OAM-Konfigurationsinformationen durchzuführen, wenn der Kandidatenpfad ein aktiver Pfad ist.

2. Verfahren nach Anspruch 1, wobei das Verfahren nach dem Senden, durch die Steuerung, des Richtlinienkonfigurationspakets an einen Kopfknoten ferner Folgendes umfasst:
Empfangen, durch die Steuerung, eines OAM-Datenpakets, wobei das OAM-Datenpaket durch Durchführen des OAM an dem ersten Pfad erhalten wird.

3. Verfahren nach einem der Ansprüche 1 bis 2, wobei das Segmentroutingrichtlinienkonfigurationspaket ein "Border-Gateway-Protocol"- bzw. BGP-Paket oder ein Pfadberechnungselement-Kommunikationsprotokoll- bzw. PCEP-Paket ist.

4. Verfahren nach einem der Ansprüche 1 bis 3, wobei die OAM-Konfigurationsinformationen eine OAM-Weise und/oder ein OAM-Objekt und/oder eine OAM-Granularität und/oder eine OAM-Frequenz umfassen.

5. Verfahren nach Anspruch 4, wobei die OAM-Weise mindestens eine der folgenden Weisen umfasst: In-situ-Betrieb, -Administration und -Wartung bzw. IOAM, Internetprotokoll-Flussleistungsmessung bzw. IPFPM, In-situ-Flussinformationstelemetrie bzw. iFIT, Zweiwege-Aktivmessprotokoll bzw. TWAMP, Einweg-Aktivmessprotokoll, OWAMP und PING.

6. Verfahren zum Empfangen eines Pakets, wobei das Verfahren Folgendes umfasst:
Empfangen (201), durch einen Kopfknoten, eines Richtlinienkonfigurationspakets, wobei das Richtlinienkonfigurationspaket Konfigurationsinformationen für Betrieb, Administration und Wartung bzw. OAM-Konfigurationsinformationen und Informationen über einen ersten Pfad umfasst und die Informationen über den ersten Pfad verwendet werden, um den ersten Pfad zu identifizieren; und
Durchführen (202), durch den Kopfknoten, von OAM an dem ersten Pfad basierend auf den OAM-Konfigurationsinformationen,
**dadurch gekennzeichnet, dass**:
das Richtlinienkonfigurationspaket ein Segmentroutingrichtlinien- bzw. SR-Richtlinienkonfigurationspaket ist, das SR-Richtlinienkonfigurationspaket Informationen über einen Kandidatenpfad umfasst, der Kandidatenpfad eine Segmentliste umfasst und der erste Pfad der Kandidatenpfad oder ein durch die Segmentliste identifizierter Pfad ist; und
wenn der erste Pfad der Kandidatenpfad ist, das SR-Richtlinienkonfigurationspaket ferner Identifikationsinformationen umfasst; und
dass das Richtlinienkonfigurationspaket verwendet wird, um dem Kopfknoten anzugeben, OAM an dem ersten Pfad basierend auf den OAM-Konfigurationsinformationen durchzuführen, Folgendes umfasst:
die Identifikationsinformationen werden verwendet, um dem Kopfknoten anzugeben, das OAM an dem Kandidatenpfad basierend auf den OAM-Konfigurationsinformationen durchzuführen, wenn der Kandidatenpfad ein aktiver Pfad ist.

7. Verfahren nach Anspruch 6, wobei das Durchführen, durch den Kopfknoten, von OAM an dem ersten Pfad basierend auf den OAM-Konfigurationsinformationen Folgendes umfasst:
Erhalten, durch den Kopfknoten, von OAM-Ausführungsinformationen basierend auf den OAM-Konfigurationsinformationen;
Empfangen, durch den Kopfknoten, eines ersten Pakets;
Hinzufügen, durch den Kopfknoten, der OAM-Ausführungsinformationen zu dem ersten Paket, um ein zweites Paket zu erzeugen; und
Senden, durch den Kopfknoten, des zweiten Pakets über den ersten Pfad.

8. Verfahren nach Anspruch 6, wobei das Durchführen, durch den Kopfknoten, von OAM an dem ersten Pfad basierend auf den OAM-Konfigurationsinformationen Folgendes umfasst:
Erzeugen, durch den Kopfknoten, eines ersten Pakets basierend auf den OAM-Konfigurationsinformationen, wobei das erste Paket OAM-Ausführungsinformationen umfasst; und
Senden, durch den Kopfknoten, des ersten Pakets über den ersten Pfad.

9. Verfahren nach einem der Ansprüche 6 bis 8, wobei das Verfahren ferner Folgendes umfasst:
Durchführen, durch den Kopfknoten, des OAM an dem ersten Pfad, um ein OAM-Datenpaket zu erhalten; und
Senden, durch den Kopfknoten, des OAM-Datenpakets an eine Steuerung.

10. Einrichtung zum Senden eines Pakets, wobei die Einrichtung dazu ausgelegt ist, das Verfahren nach einem der Ansprüche 1 bis 5 zu implementieren.

11. Einrichtung zum Empfangen eines Pakets, wobei die Einrichtung dazu ausgelegt ist, das Verfahren nach einem der Ansprüche 6 bis 9 zu implementieren.

12. System (700) zum Senden und Empfangen eines Pakets, wobei das System eine Steuerung (701) und einen Kopfknoten (702) umfasst, die Steuerung dazu ausgelegt ist, das Verfahren nach einem der Ansprüche 1 bis 5 zu implementieren, und der Kopfknoten dazu ausgelegt ist, das Verfahren nach einem der Ansprüche 6 bis 9 zu implementieren.

## Revendications

1. Procédé d'envoi d'un paquet, dans lequel le procédé comprend :
la génération (101), par un contrôleur, d'un paquet de configuration de politique, le paquet de configuration de politique comprenant des informations de configuration d'opérations, d'administration et de maintenance, OAM, et des informations concernant un premier chemin, et les informations concernant le premier chemin étant utilisées pour identifier le premier chemin ; et
l'envoi (102), par le contrôleur, du paquet de configuration de politique à un nœud de tête du premier chemin, le paquet de configuration de politique étant utilisé pour indiquer au nœud de tête de réaliser une OAM sur le premier chemin sur la base des informations de configuration d'OAM,
**caractérisé en ce que** :
le paquet de configuration de politique est un paquet de configuration de politique de routage de segments, politique SR, le paquet de configuration de politique SR comprend des informations sur un chemin candidat, le chemin candidat comprend une liste de segments, et le premier chemin est le chemin candidat ou un chemin identifié par la liste de segments ; et
lorsque le premier chemin est le chemin candidat, le paquet de configuration de politique SR comprend en outre des informations d'identification ; et
**en ce que** le fait que le paquet de configuration de politique est utilisé pour indiquer au nœud de tête de réaliser une OAM sur le premier chemin sur la base des informations de configuration d'OAM comprend :
le fait que les informations d'identification sont utilisées pour indiquer au nœud de tête de réaliser une OAM sur le chemin candidat sur la base des informations de configuration d'OAM lorsque le chemin candidat est un chemin actif.

2. Procédé selon la revendication 1, dans lequel, après l'envoi, par le contrôleur, du paquet de configuration de politique à un nœud de tête, le procédé comprend en outre :
la réception, par le contrôleur, d'un paquet de données d'OAM, le paquet de données d'OAM étant obtenu en réalisant une OAM sur le premier chemin.

3. Procédé selon l'une quelconque des revendications 1 et 2, dans lequel le paquet de configuration de politique de routage de segment est un paquet de protocole de passerelle frontière, BGP, ou un paquet de protocole de communication d'éléments de calcul de chemin, PCEP.

4. Procédé selon l'une quelconque des revendications 1 à 3, dans lequel les informations de configuration d'OAM comprennent au moins l'une d'une manière d'OAM, d'un objet d'OAM, d'une granularité d'OAM et d'une fréquence d'OAM.

5. Procédé selon la revendication 4, dans lequel la manière d'OAM comprend au moins l'une des manières suivantes : opérations , administration et maintenance in situ, IOAM, mesure de performance de flux de protocole Internet, IPFPM, télémétrie d'informations de flux in situ, iFIT, protocole de mesure active bidirectionnelle, TWAMP, protocole de mesure active unidirectionnelle, OWAMP et PING.

6. Procédé de réception d'un paquet, dans lequel le procédé comprend :
la réception (201), par un nœud de tête, d'un paquet de configuration de politique, le paquet de configuration de politique comprenant des informations de configuration d'opérations, d'administration et de maintenance, OAM, et des informations concernant un premier chemin, et les informations concernant le premier chemin étant utilisées pour identifier le premier chemin ; et
la réalisation (202), par le nœud de tête, d'une OAM sur le premier chemin sur la base des informations de configuration d'OAM,
**caractérisé en ce que** :
le paquet de configuration de politique est un paquet de configuration de politique de routage de segments, politique SR, le paquet de configuration de politique SR comprend des informations sur un chemin candidat, le chemin candidat comprend une liste de segments, et le premier chemin est le chemin candidat ou un chemin identifié par la liste de segments ; et
lorsque le premier chemin est le chemin candidat, le paquet de configuration de politique SR comprend en outre des informations d'identification ; et
**en ce que** le fait que le paquet de configuration de politique est utilisé pour indiquer au nœud de tête de réaliser une OAM sur le premier chemin sur la base des informations de configuration d'OAM comprend :
le fait que les informations d'identification sont utilisées pour indiquer au nœud de tête de réaliser une OAM sur le chemin candidat sur la base des informations de configuration d'OAM lorsque le chemin candidat est un chemin actif.

7. Procédé selon la revendication 6, dans lequel la réalisation, par le nœud de tête, d'une OAM sur le premier chemin sur la base des informations de configuration d'OAM comprend :
l'obtention, par le nœud de tête, d'informations d'exécution d'OAM sur la base des informations de configuration d'OAM ;
la réception, par le nœud de tête, d'un premier paquet ;
l'ajout, par le nœud de tête, des informations d'exécution d'OAM au premier paquet, pour générer un deuxième paquet ; et
l'envoi, par le nœud de tête, du deuxième paquet par le premier chemin.

8. Procédé selon la revendication 6, dans lequel la réalisation, par le nœud de tête, d'une OAM sur le premier chemin sur la base des informations de configuration d'OAM comprend :
la génération, par le nœud de tête, d'un premier paquet sur la base des informations de configuration d'OAM, le premier paquet comprenant des informations d'exécution d'OAM ; et
l'envoi, par le nœud de tête, du premier paquet par le premier chemin.

9. Procédé selon l'une quelconque des revendications 6 à 8, le procédé comprenant en outre :
la réalisation, par le nœud de tête, de l'OAM sur le premier chemin, pour obtenir un paquet de données d'OAM ; et
l'envoi, par le nœud de tête, du paquet de données d'OAM à un contrôleur.

10. Appareil d'envoi d'un paquet, dans lequel l'appareil est configuré pour mettre en œuvre le procédé selon l'une quelconque des revendications 1 à 5.

11. Appareil de réception d'un paquet, dans lequel l'appareil est configuré pour mettre en œuvre le procédé selon l'une quelconque des revendications 6 à 9.

12. Système (700) d'envoi et de réception d'un paquet, dans lequel le système comprend un contrôleur (701) et un nœud de tête (702), le contrôleur est configuré pour mettre en œuvre le procédé selon l'une quelconque des revendications 1 à 5, et le nœud de tête est configuré pour mettre en œuvre le procédé selon l'une quelconque des revendications 6 à 9.
